# EUROPEAN PATENT APPLICATION

(11) **EP 2 039 424 A1**
(43) Date of publication of application: **25.03.2009**
(21) Application number: 07744956.9
(22) Date of filing: 08.06.2007
(51) Int. Cl.: B01J 20/26, C08F 220/20, C08F 220/26, G01N 30/88

(54) **AFFINITY CARRIER AND METHOD FOR PRODUCTION THEREOF**

(30) Priority: 08.06.2006 JP 2006159594
(71) Applicant: Reverse Proteomics Research Institute Co., Ltd, Chiyoda-ku Tokyo 101-0044 (JP)
(72) Inventor: HOSOYA, Ken, Kyoto-shi Kyoto 612-8031 (JP); MORI, Tomoko, Wakayama-shi Wakayama 640-8313 (JP); TANAKA, Akito, Tsukuba-shi Ibaraki 305-0051 (JP); TAKAHASHI, Teruki, Osaka-shi Osaka 554-0022 (JP)
(74) Representative: Heinemann, Monica
(86) International application number: PCT/JP2007/061640
(87) International publication number: WO 2007/142331

(57) **Abstract**

An affinity carrier not of a particle aggregation type but in a gel state having a bicontinuous structure composed of pores having an average diameter of micrometer size arranged continuously in a three-dimensional network structure and a skeletal phase abundant in organic matters, comprising

at least one compound having at least two functionalities as a crosslinking agent of a vinyl monomer compound, a methacrylate compound or an acrylate compound; and
a copolymer of at least one monofunctional hydrophilic monomer as a ligand-carrying monomer and at least one monofunctional thinning monomer as a thinning agent for arbitrarily controlling a hydrophilic/hydrophobic environment in which a ligand carried by said ligand-carrying monomer is put,
wherein a volume ratio of said crosslinking agent to "said copolymer of the monofunctional hydrophilic monomer and the monofunctional thinning monomer" in said affinity carrier is 100 to 10:0 to 90.

## Description

### TECHNICAL FIELD

The present invention relates to an organic polymer affinity carrier (polymer monolith having a support function) not of a particle aggregation type but in a gel state having a bicontinuous structure composed of pores having an average diameter of micrometer size arranged continuously in a three-dimensional network structure and a skeletal phase abundant in organic matters, in which nonspecific adsorption of protein is decreased, a ligand-carrying monomer functions effectively and capturing efficiency to a target protein is improved, and to a method for producing the affinity carrier.

### BACKGROUND ART

Recently, pharmaceutical companies have actively searched novel drug discovery targets. In such circumstances, one of studying methods for drug discovery that attracts attention is a method of studying a biologically active substance that will not be used as a drug by itself due to problems such as its pharmacological activity, side effects and physical properties to identify a target protein in the biologically active substance and reconstructing a more effective evaluation system to create a novel biologically active substance that overcomes the problems. Since the novel drug discovery target thus obtained is secured of its effect in vivo by an original biologically active substance thereof, it is expected that this pharmaceutical candidate compound obtained by the method, namely Forward Chemical Genetics, less likely eventuates in "failure" in drug discovery study. On the other hand, in studies focusing a protein due to high homology thereof to a known drug discovery target protein and the like as a drug discovery target, there is a problem that the protein as a drug discovery target does not play a role as expected at first in an organism, and a pharmaceutical candidate compound finally obtained does not exhibit a desired effect in vivo (e.g., see Non-Patent Documents 1 and 2 below). In the Forward Chemical Genetics strategy, in order to identify a target protein in a biologically active substance, an affinity resin serves an important role. For isolation of a target protein by affinity chromatography, there are some reports (see Non-Patent Documents 1 and 2 below).
[Non-Patent Documents 1] S. L. Schreiber, The small-molecule approach to biology, Chem. Eng. News, 2003, 81, pp 51-61.
[Non-Patent Documents 2] M. Yoshida, et al., Tokusyu kemikaru genomikusu no tannjou (Birth of Chemical Genomics), Tanpakushitsu Kakusan Kouso (Protein, nucleic acid and enzyme), 2005, 50, pp 1031-1077.

Examples of the affinity gel that has been conventionally used include acrylate-based cross-linked resins such as Toyopearl (trade name) manufactured by Tosoh Corporation and naturally-derived gels such as Affigel (trade name) manufactured by Pharmacia. However, these affinity gels both have advantages and disadvantages. In the former, nonspecific adsorption of protein is likely to be occurred due to its relatively high hydrophobicity, which hinders analysis of intended interaction between a ligand (small molecular weight) and a protein in many cases. The latter, Affigel (trade mark), has sufficient hydrophilicity as suppressing nonspecific adsorption of protein, but also has disadvantages such as low chemical stability and large restriction in its synthesis development. There is a need for new affinity gel having hydrophilicity as Affigel (trade mark) and stability as Toyopearl (trade mark). However, since the biology field requiring the gel and the polymer field producing the gel have not been incorporated, new affinity gel has not been come on the market until now.

Most of affinity resins are produced by copolymerizing 1 to 2 parts of crosslinking agent (bi- or trifunctional monomer) with 99 to 98 parts of ligand-carrying monomer. The composition is based on the experimental fact that a highly crass-linked resin prevents substances from migrating therein and cannot perform as the affinity resin. In practice, some resins swell with certain solvents used to cause changes in volume and form, and therefore adverse effects on performances as the affinity resin. To solve the problem, nanoparticles without pores and porous particles having large pores have been synthesized. However, both of them have a problem of nonspecific absorption of protein due to hydrophobicity of monomers used therein, which still cannot be solved. Those problems are common with affinity resins on the market at present.

Consequently, new method has been attempted that a material having a bicontinuous structure (monolith) in which a skeleton and flow passages are integrated is synthesized to be used as the affinity resin. In the method, control of a size of the skeleton itself to one to two microns and increase of a size of the flow passages in which a liquid flows to about two to five microns can be simultaneously achieved, and the skeleton and the flow passages form a continuous structure linking each other. The material is therefore designed so as to solve conventional problems by increasing the size of the flow passages while having a highly cross-linked structure. Highly cross-linked monolith type affinity resins have been developed with hydrophilic monomers, which offer a direction to overcome the conventional problems.

However, the result has been shown that increase in density of crosslinking structure provides more stable structure, but on the other hand, causes failure in alignment of ligand-carrying sites on the surface of a resin at an appropriate density, which is the key point, resulting in a resin exhibiting performances not as good as expected although having a good structure. It is a boundary of resins by copolymerization. Introduction of ligand-carrying sites by surface modification after polymerization also cannot provide a significant solution due to a problem of alignment on the surface.

### DISCLOSURE OF THE INVENTION

### PROBLEM TO BE SOLVED BY THE INVENTION

To solve the above problems, use of a third monomer that can reduce a density of a ligand-carrying monomer while keeping a crosslinking degree to a certain level, and provide good environment to the ligand-carrying monomer advantageous for an intended affinity reaction thereof can be proposed as an approach. Although presence of the third monomer has a potential to clean out faults of the conventional affinity resins, it makes a polymer system complicated and has a problem, as a matter of course, of endangering formation of a monolith structure. This approach for solving the problems therefore cannot be found on an extension of the conventional way. The objects of the present invention are the use of a third monomer (thinning monomer) to appropriately reducing a density of the ligand while creating an environment in which the ligand works effectively to provide an environment in which an affinity reaction is likely to occur, development of a method for constructing a monolith structure under a condition of relatively free combination thereof and improvement of capturing efficiency to a target protein using the same. In other words, the present invention is to provide a novel affinity carrier in which nonspecific adsorption of protein is decreased, a ligand-carrying monomer functions effectively and capturing efficiency to a target protein is improved, which can clean out the conventional problems. Here, the reason of introduction of the third monomer being effective for improving functions of the affinity resin is that a protein near a cell membrane tends to interact effectively with a ligand molecule in a hydrophobic environment, while an intracellular protein often exhibits its original function in a hydrophilic environment in contrast in many cases.

It is also the object of the present invention to provide a suitable method for producing the affinity carrier having the above characteristics.

As the result of extensive investigation, the present inventors have developed a new methacrylate-based monomer for ligand immobilization having a PEG (polyethylene glycol) type spacer and a sufficient hydrophilicity, and have found that from the monomer and a bifunctional methacrylate crosslinking agent having a similar PEG type spacer, a monolith type affinity gel having a bicontinuous structure can be obtained, which has a sufficient hydrophilicity and secures a sufficient flow of liquid, and have accomplished the invention. In general, it is difficult to form a monolith structure when increasing much amount of monofunctional monomers. The present invention has developed a technique to overcome the difficulty. The technique also has a characteristic of maintaining a monolith structure even when containing a monomer as a so-called "thinning agent," which is capable of setting an environment in which the ligand is put to be a hydrophilic environment (supposing intracellular proteins) or a hydrophobic environment (supposing membrane proteins) without limitation. The technique is also excellent as a forming technique.

### MEANS FOR SOLVING THE PROBLEMS

The affinity carrier of the present invention that can solve the problems described above is an organic polymer material (so-called organic monolith material) not of a particle aggregation type but in a gel state having a bicontinuous structure composed of pores having an average diameter of micrometer size arranged continuously in a three-dimensional network structure and a skeletal phase abundant in organic matters, wherein the affinity carrier is a copolymer of at least one compound having at least two functionalities as a crosslinking agent of a vinyl monomer compound, a methacrylate compound or an acrylate compound, at least one monofunctional hydrophilic monomer as a ligand-carrying monomer and at least one monofunctional thinning monomer as a thinning agent for arbitrarily controlling a hydrophilic/hydrophobic environment in which a ligand carried by the ligand-carrying monomer is put, and wherein a volume ratio of the crosslinking agent to (a copolymer of the monofunctional hydrophilic monomer and the monofunctional thinning monomer) in the affinity carrier is 100 to 10:0 to 90.

In addition, the monofunctional thinning monomer in the affinity carrier having features described above of the present invention is a monomer having a hydrophilic group selected from the group consisting of an amino group, an amide group, an ammonium group, a carboxyl group, an ester group, an ether group, a carbonyl group, a hydroxy group, a sulfo group and a phosphate group and a functional group selected from the group consisting of an alkyl group and a phenyl group, derivatives thereof and protected products thereof.

The method of the present invention for producing the affinity carrier not of a particle aggregation type but in a gel state having a bicontinuous structure composed of pores having an average diameter of micrometer size arranged continuously in a three-dimensional network structure and a skeletal phase abundant in organic matters includes: blending at least one bifunctional compound as the crosslinking agent of a vinyl monomer compound, a methacrylate compound and an acrylate compound, at least one monofunctional hydrophilic monomer as the ligand-carrying monomer and at least one monofunctional thinning monomer as the thinning agent for arbitrarily controlling a hydrophilic/hydrophobic environment in which a ligand carried by the ligand-carrying monomer is put in such amounts that a volume ratio of the crosslinking agent to (a copolymer of the monofunctional hydrophilic monomer and the monofunctional thinning monomer) is 100 to 10:0 to 90; copolymerizing them in the presence of a radical-polymerization initiator in water or at least one solvent selected from the group consisting of aqueous solvents having molecular weights of not more than 500 to give a gel matter; and then immersing the gel matter in water or an organic solvent such as methanol, acetone and THF to wash it; and drying for keeping the bicontinuous structure.

Further, the aqueous solvent in the method for producing the affinity carrier having features described above of the present invention is selected from the group consisting of ethylene glycol, diethylene glycol, triethylene glycol, tetraethylene glycol, pentaethylene glycol, hexaethylene glycol, triethylamine, vinylpyridine, formamide, dimethylformamide, acetonitrile, acetone, methanol and ethanol.

### EFFECTS OF THE INVENTION

The affinity carrier of the present invention is an organic polymer gel having a structure in which pores having micrometer size are arranged continuously in a three-dimensional network structure, and has high chemical stability similarly as a methacrylate resin carrier and hydrophilic characteristics sufficiently preventing nonspecific adsorption similarly as an agarose resin. According to the method of the present invention, the affinity carrier having the characteristics described above can be efficiently produced by relatively simple steps.

In addition, the affinity carrier of the present invention is what craved for new affinity carrier forming the centerpiece of chemical genomics that is the key of future pharmaceutical technology, and thus is expected to have many potential users. Further, these techniques are not only applicable to affinity gel, but also will contribute to a creation of a novel hydrophilic or ion-exchanging polymer material having a bicontinuous structure. The techniques are therefore expected to have an extraordinary effect on an environmental-related field and/or an analytical chemistry field.

### BRIEF DESCRIPTION OF THE DRAWINGS

Fig. 1 shows schematic diagram of an affinity carrier of the present invention in which a thinning monomer is introduced.
Fig. 2 is a series of electron microscope images of the affinity carrier of the present invention (thinning monomer-introduced affinity carrier) obtained in Example 1, and shows an effect on a monolith structure with different crosslinking agents and solvents.
Fig. 3 is a series of electron microscope images of the affinity carrier of the present invention (thinning monomer-introduced affinity carrier) obtained in Example 1, and shows an effect on a monolith structure with different amounts of the crosslinking agent.
Fig. 4 is a series of electron microscope images of the affinity carrier of the present invention (thinning monomer-introduced affinity carrier) obtained in Example 1, and shows an effect on a monolith structure with different amounts of the thinning monomer.
Fig. 5 shows results of protein binding tests (performance of an affinity resin) using the affinity carrier of the present invention described in Example 2.
Fig. 6 is a series of electron microscope images of copolymers obtained in Example 3, and shows an effect on a monolith structure with different solvents used in copolymerization.

### BEST MODE FOR CARRYING OUT THE INVENTION

The affinity carrier of the present invention is a polymer monolith type carrier having a support function including at least one crosslinking agent having at least two functionalities of a vinyl monomer crosslinking agent, a methacrylate crosslinking agent or an acrylate crosslinking agent, at least one monofunctional hydrophilic monomer (hydrophilic functional monomer having a mono functionality) as the ligand-carrying monomer and at least one monofunctional thinning monomer as the thinning agent for arbitrarily controlling a hydrophilic/hydrophobic environment in which a ligand carried by the ligand-carrying monomer is put, that are added to the crosslinking agent in an amount of 0 % to 90 % by volume, preferably 5 % to 50 % by volume. The affinity carrier is obtained by copolymerization of these compounds, is a copolymer not of a polymer particle aggregation type but in a gel state having a bicontinuous structure, and has high chemical stability and hydrophilic characteristics sufficiently preventing nonspecific adsorption similarly as an agarose resin. The bicontinuous structure of the affinity carrier of the present invention is composed of pores having an average diameter of micrometer size arranged continuously in a three-dimensional network structure and a skeletal phase abundant in organic matters.

In the affinity carrier of the present invention, bicontinuous pores having sizes of 0.1 µm to 50 µm and being monodisperse and the skeleton having a size of 0.1 µm to 50 µm and being monodisperse are combined.

Examples of "the bifunctional crosslinking agent of the vinyl monomer crosslinking agent, the methacrylate crosslinking agent or the acrylate crosslinking agent" constituting the affinity carrier of the present invention include such as oligo-compounds of divinylbenzene, ethylene glycol dimethacrylate, diethylene glycol dimethacrylate and the like, polyethylene glycol dimethacrylates and acrylate-substituted products, glycerol dimethacrylate, vinyl methacrylate, N,N'-methylenebisacrylamide. Particularly preferred compound is, from the point of formation of continuous structure of pores in the three-dimensional network, nonaethylene glycol dimethacrylate having 9 polyethylene glycol units. This compound is commercially available, for example, from Shin-Nakamura Chemical Co., Ltd under a trade name of "NK ESTER 9G." In the present invention, a commercial bifunctional crosslinking agent can be used.

On the other hand, "the monofunctional hydrophilic monomer" constituting the affinity carrier of the present invention is a monomer for supporting a ligand. Specific examples include hydrophilic monomers (monofunctional monomer having a support function) having an amino group, an amide group, a carboxyl group, an ester group, a carbonyl group, a hydroxy group, a sulfo group and a phosphate group and derivatives thereof. Preferred are, for example, a pOH-type monomer and a PEG-type monomer synthesized according to reactions in the following Scheme 1. In the present invention, the functional group described above functions to reject nonspecific adsorption due to hydrophobicity of the gel.

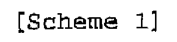

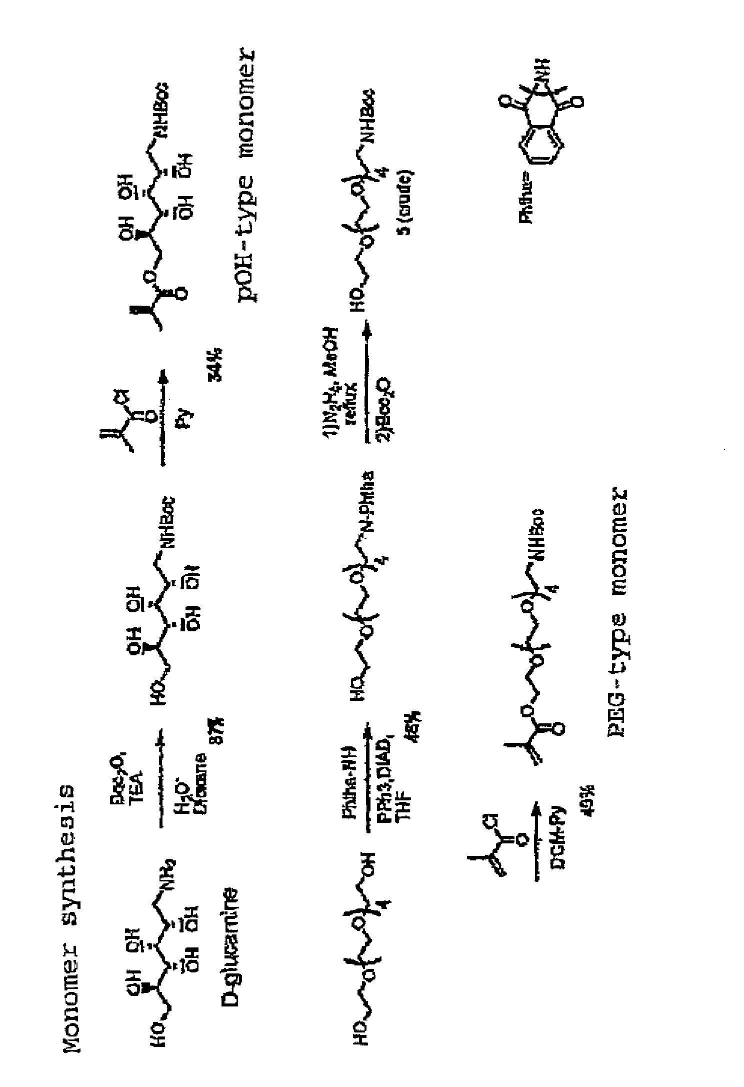

Examples also include monomers having a halogenated alkyl group (e.g., chloromethylstyrene), monomers having an epoxy group (e.g., glycidyl methacrylate) and monomers having a phenyl group (e.g., styrene), into which a hydrophilic group can be introduced.

Further, "the thinning monomer," in the present invention is a monofunctional monomer that can control an amount of ligand supported and a hydrophilic/hydrophobic environment on the surface of the affinity carrier, and is introduced for controlling them to increase a binding amount of protein. Specific examples of the monomer include monomers having a hydrophilic group selected from the group consisting of an amino group, an amide group, an ammonium group, an carboxyl group, an ester group, an ether group, a carbonyl group, a hydroxy group, a sulfo group and a phosphate group and a functional group selected from the group consisting of an alkyl group and a phenyl group and derivatives thereof and protected products thereof. Two or more kinds may be introduced. Preferred examples of "the thinning monomer" include methacrylates and acrylates having a hydroxyl group and an ether group such as diethylene glycol monomethyl ether methacrylate, hydroxyethyl methacrylate (HEMA) and glycidyl methacrylate, and further alkyl methacrylates such as methyl methacrylate, butyl methacrylate and tridecyl methacrylate and styrenes. In addition, in the present invention, by using a different thinning monomer, an environment of the surface of the affinity carrier can be changed to a hydrophilic environment corresponding to an environment in which an intracellular protein is present or to a hydrophobic environment corresponding to an environment in which a membrane protein is present. The present invention is therefore useful for application in search of a target protein using an affinity carrier in future.

In the affinity carrier of the present invention that selectively and efficiently adsorbs a target protein and is preferred as an affinity resin, a constitution weight ratio of the bifunctional crosslinking agent to (the monofunctional hydrophilic monomer + the monofunctional thinning monomer) is 20 to 100:80 to 0, preferably 50 to 95:50 to 5, and particularly preferably 30 to 80:70 to 20. In the present invention, when a constitution weight ratio of the bifunctional crosslinking agent is not more than 10, the monolith structure (three-dimensional network structure) cannot be stably maintained.

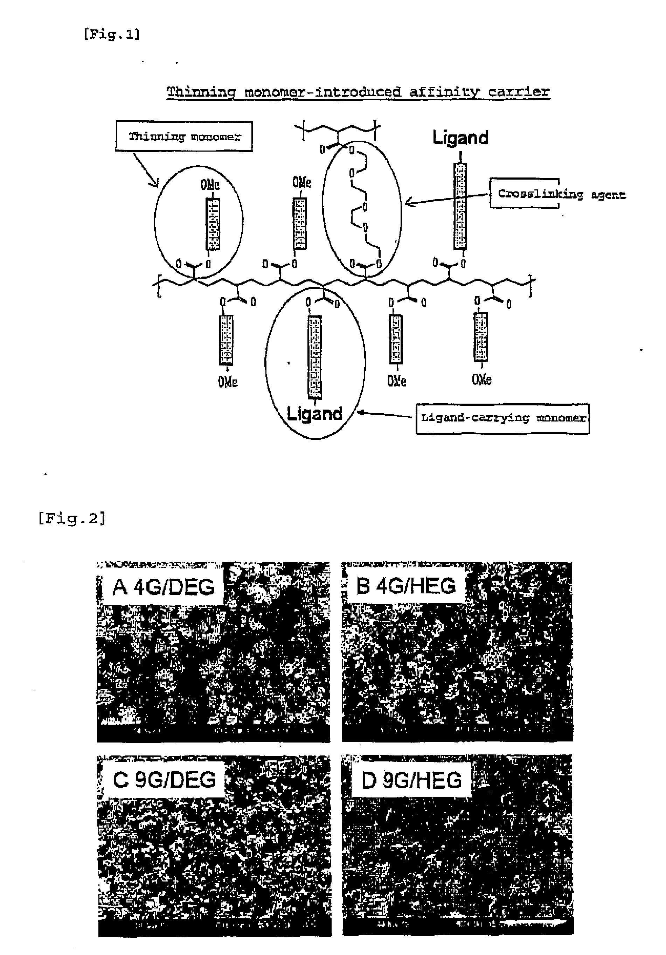

Here, a ratio of the thinning monomer to the ligand-carrying monomer in the affinity carrier of the present invention is appropriately selected according to a required amount of a ligand supported, a hydrophilic/hydrophobic environment of the surface of the affinity carrier. A schematic diagram of the improved affinity carrier in which the thinning monomer is introduced is shown in Fig. 1.

The affinity carrier of the present invention composed of the composition monomers described above has such sufficient hydrophilicity as sorbing water therein within a minutes, preferably within ten seconds, and particularly preferably within a second, when water is dropped on the surface of the carrier in a dry state. Such hydrophilicity arises from a continuous three-dimensional network structure of pores and the hydrophilic group in the constituent monomers.

Examples of application of the affinity carrier of the present invention include in addition to solid-phase materials for biochemistry such as an affinity carrier and a support carrier, chromatography stationary phases such as an ion exchange chromatography carrier, a chiral chromatography carrier, a philic chromatography carrier and a reverse phase chromatography carrier, capturing supports for environmental toxicants in a gas and a liquid phases, stationary phases for water purification, electrophoretic carriers and cell culture carriers, and the like.

Next, the production method of the present invention suitable for efficiently producing the affinity carrier will be described.

In the production method of the present invention, at least one bifunctional compound of a vinyl monomer compound, a methacrylate compound or an acrylate compound, at least one monofunctional hydrophilic monomer as the ligand-carrying monomer and at least one monofunctional thinning monomer as the thinning agent for arbitrarily controlling a hydrophilic/hydrophobic environment in which a ligand carried by the ligand-carrying monomer is put, which are previously prepared, are blended in such amounts that a weight ratio (mixing ratio) of the bifunctional compound to (a copolymer of the monofunctional hydrophilic monomer and the monofunctional thinning monomer) is 100 to 10:0 to 90. A mixture is added and mixed into water or an aqueous solvent, a radical polymerization initiator was added thereto, and the resultant was heated or treated with ultraviolet irradiation to copolymerize. In this production, as the aqueous solvent, a low molecular weight (not more than 500) solvent that can dissolve in water without limitation can be used. Preferred examples of the solvent include ethylene glycol condensate solvents such as ethylene glycol, diethylene glycol and triethylene glycol; solvents having an amino group such as triethylamine and vinylpyridine; solvents having an amide group such as formamide and dimethylformamide; solvents having a cyano group such as acetonitrile; solvents having a carbonyl group such as acetone; and solvents having a hydroxy group such as methanol and ethanol. In the present invention, a solvent insoluble in water (e.g., paraffins, aromatic hydrocarbons and halogenated hydrocarbons) cannot be used as the solvent for copolymerization. When a solvent insoluble in water is used, an organic polymer gel including pores having micrometer size arranged continuously in a three-dimensional network structure cannot be obtained. The total amount of monomers added to the aqueous solvent is preferably 10 to 120 parts by weight based on 100 parts by weight of a solvent.

In the present invention, a type of the radical polymerization initiator used in copolymerization is not specifically limited. Various typical radical polymerization initiators that can initiate polymerization by heating or ultraviolet irradiation can be used. For polymerization conditions (polymerization temperature, period, etc.), an uncommon condition is not required, and radical polymerization can be performed under typical conditions. Examples of the initiator preferably used in the present invention include peroxide radical initiators such as benzoyl peroxide and ammonium persulfate; azo radical initiators such as azobisisobutyronitrile (AIBN), azobis-2,4-dimethylvalaronitrile (ADVN); and water-soluble and oil-soluble redox-type radical initiators such as those composed of dimethylaniline and benzoyl peroxide. The initiator is added in an amount of 0.2 parts to 10 parts, and preferably 0.5 parts to 3 parts.

In the present invention, the gel matter obtained by the copolymerization is immersed in water for wasting and dried. In these operations, washing is generally repeated two to three times, and drying is generally heat drying.

Observation of the surface of the polymer thus obtained by scanning electron microscopy (SEM) shows that pores of around 10 nm to 10 µm form a continuous three-dimensional network structure. The affinity carrier having such a pore structure arranged in a three-dimensional network has high chemical stability and hydrophilic characteristics sufficient to prevent nonspecific adsorption similarly as an agarose resin.

The present invention will be described with reference to Examples of the present invention, but the present invention is not restricted thereby.

### Examples

### Example 1: Preparation of the affinity carrier of the present invention

### [Reagents and solvents]

As the methacrylate crosslinking agent containing a polyethylene glycol unit in a main chain, nonaethylene glycol dimethacrylate (trade name: NK ESTER 9G, manufactured by Shin-Nakamura Chemical Co., Ltd) and tetraethylene glycol dimethacrylate (trade name: NK ESTER 4G, manufactured by Shin-Nakamura Chemical Co.,Ltd), which are commercially available, were used as they are.

As the ligand-carrying monomer (monofunctional monomer having a functional group), an amine-protected PEG-type monomer synthesized as shown in Scheme 1 was used. As the thinning monomer, diethylene glycol monomethyl ether methacrylate (Tokyo Chemical Industry Co., Ltd., Tokyokasei first grade) was used as it is. Here, as the radical polymerization initiator, 2,2'-azobis-2,4-dimethylvaleronitrile (ADVN) (Wako Pure Chemical Industries, Ltd., Wako first grade) was used as it is. As the solvent, diethylene glycol (Wako Pure Chemical Industries, Ltd., Wako first grade) or hexaethylene glycol (Wako Pure Chemical Industries, Ltd.) was used as it is.

### [Preparation of gel]

Into a 1.5 ml Eppendorf tube were charged a ligand-carrying monomer (Lig-m), a crosslinking agent, a solvent and a thinning monomer (Mab-m) in compositions shown in the following Tables 1 to 3, and degassed using argon, which operation also means stirring. To the tube was further added 5 mg of ADVN and degassed again to completely dissolve ADVN. The tube was sealed with Valqua tape and placed in a hot water bath at 60 °C for 24 hours to cause heat polymerization. After polymerization, affinity carriers were taken off, and immersed in methanol for washing. As the solvent, diethylene glycol (DEG) and hexaethylene glycol (HEG) were used. In addition, as the crosslinking agent, 9G and 4G described above were used.

**Table 1. Abbreviation and composition of improved affinity carrier containing a thinning agent**

| | Lig-m | Mab-m | Crosslinking agent | Solvent (µl) |
|---|---|---|---|---|
| | (× 0.043 mmol) | (× 0.043 mmol) | (× 0.043 mmol) | |
| A | 1 | 1 | 4G 9 | DEG 375 |
| B | 1 | 1 | 4G 9 | HEG 375 |
| C | 1 | 1 | 9G 9 | DEG 375 |
| D | 1 | 1 | 9G 9 | HEG 375 |

**Table 2. Abbreviation and composition of improved affinity carrier containing a thinning agent (variation in amount of crosslinking agent)**

| | Lig-m | Mab-m | Crosslinking | Solvent (µl) |
|---|---|---|---|---|
| | (× 0.043 mmol) | (× 0.043 mmol) | agent (× 0.043 mmol) | |
| E | 1 | 7 | 9G 1.5 | DEG 375 |
| F | 1 | 7 | 9G 3.0 | DEG 375 |
| G | 1 | 7 | 3G 4.5 | DEG 375 |
| H | 1 | 7 | 9G 6.0 | DEG 375 |

**Table 3. Abbreviation and composition of improved affinity carrier containing a thinning agent (variation in amount of thinning agent)**

| | Lig-m | Mab-m | Crosslinking | Solvent (µl) |
|---|---|---|---|---|
| | (× 0.043 mmol) | (× 0.043 mmol) | agent (× 0.043 mmol) | |
| I | 1 | 3.5 | 9G 3 | DEG 375 |
| J | 1 | 7 | 9G 3 | DEG 375 |
| K | 1 | 10.5 | 9G 3 | DEG 375 |
| L | 1 | 14 | 9G 3 | DEG 375 |
| M | 1 | 21 | 9G 3 | DEG 375 |
| N | 1 | 35 | 9G 3 | DEG 375 |

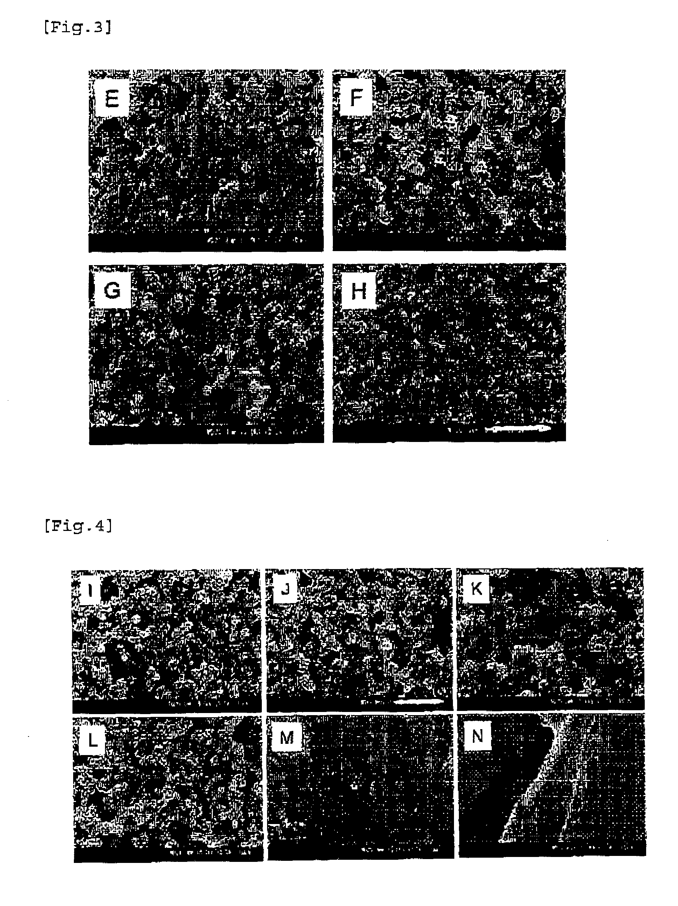

Figs. 2 to 4 show scanning electron microscope (SEM) images (x3000) of an improved affinity carrier containing a thinning agent.

The microscope images in Figs. 2 to 4 show that when a ratio (molar ratio) of the ligand-carrying monomer to the thinning monomer is within the range of 1:1 to 1:14, a monolith structure (a structure in which pores having micrometer size arranged continuously in a three-dimensional network) is formed, but when the ratio is not less than 1:21, the monolith structure is not formed.

### Example 2: Protein binding test of the affinity carrier of the present invention

### CCB and western blot

Improved affinity carriers containing a thinning agent (compositions A to D) obtained in Example 1 were subjected to a protein capturing test using FK506 (bearing a linker at 32-position) as a ligand immobilized thereon in 0. 1 equivalent amount to the amino group on the resin. FK506 is an immunosuppressive agent known to strongly bind to a specific binding protein FKBP12.

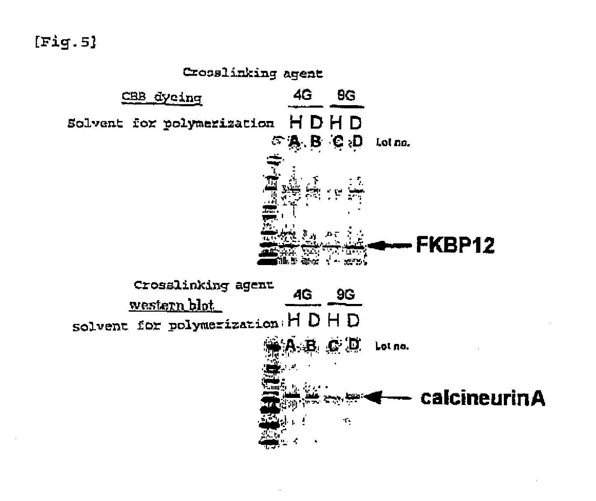

Fig. 5 shows results of the protein binding test of the improved affinity carriers containing a thinning agent.

From the protein capturing test shown in Fig. 5, an effect of introduction of thinning monomer was confirmed, as binding amounts of FKBP12 and calcineurin A were dramatically increased. Prior studies suggested that when FK506 occupies 100 % of the immobilizing site on the surface of the affinity carrier, since there is much amount of FK506 on the surface (FK506 is placed near to each other) binding thereof to proteins is inhibited due to increased hydrophobic interaction among FK506. It is believed that addition of a thinning monomer decreased the number of FK506 immobilizing site and thus reduced interaction among FK506, and therefore, FK506 can bind stronger to proteins and an amount of target protein bound thereto was sufficient. It is also believed that the thinning monomer modified a hydrophobic/hydrophilic environment on the surface of the carrier to an environment easier for a target protein to access to the ligand, thereby leading a good result.

As described above, it was confirmed that when the affinity carrier of the present invention was used, in isolation of the target protein by affinity chromatography, nonspecific adsorption of protein on the affinity resin was not observed, and it was confirmed that the target protein was selectively and efficiently adsorbed.

### Example 3: Observation of structures of copolymer products by using different solvents in copolymerization

Copolymerization was performed under the same conditions as in Example 1 using the following ingredient in compositions shown in Table 4 : the ligand-carrying monomer and the thinning monomer described in Example 1; the 9G and ethylene glycol dimethacrylate (EDMA) (Nacalai Tesque, Inc., CP grade) as the cross linking agent; xylene, chloropentane and diethylene glycol as the solvent; and ADVN as the initiator. Resultant copolymers were taken off, washed with alcohol, and dried.

**Table 4. Abbreviation and composition of affinity carrier containing a thinning agent**

| | Lig-m | Mab-m | Crosslinking agent | Solvent (µl) |
|---|---|---|---|---|
| | (× 0.043 mmol) | (× 0.043 mmol) | (× 0.043 mmol) | |
| (1) | 1 | 7 | 9G 3 | Xylene 375 |
| (2) | 1 | 7 | 9G 3 | Chloropentane 375 |
| (3) | 1 | 7 | EDMA 3 | DEG 375 |

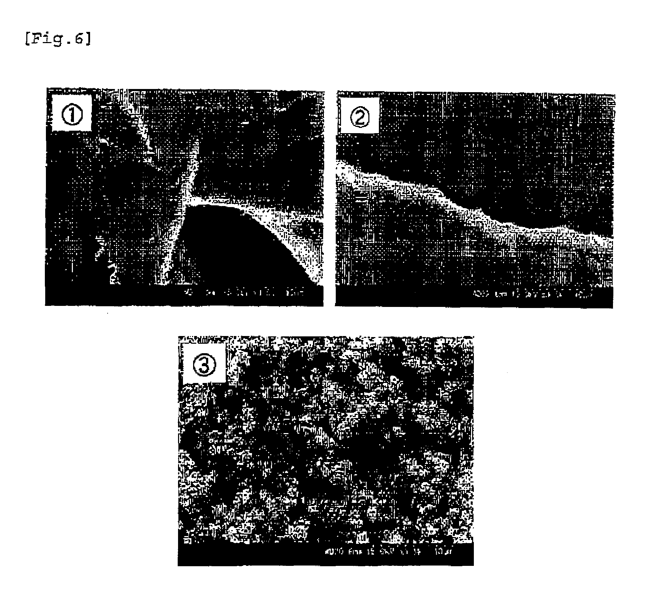

Fig. 6 shows electron microscope images of the copolymers obtained in Example 3.

The electron microscope images in Fig. 6 show that when xylene or chloropentane were used as the solvent, a monolith structure was not obtained, while when diethylene glycol, which is one of water-soluble solvents, was used, a bicontinuous structure composed of pores having an average diameter of micrometer size arranged continuously in a three-dimensional network and a skeletal phase abundant in organic matters was formed.

### Industrial Applicability

The affinity carrier of the present invention having a monolith structure can arbitrarily set an environment in which a ligand is put to be a hydrophilic environment or a hydrophobic environment by appropriately selecting a type of thinning monomer introduced into the carrier, and is particularly useful in the field of pharmaceutical technology. In addition, the technique of variously changing the environment in which a ligand is put by the method can contribute to a creation of hydrophilic and ion-exchanging polymer materials having a novel bicontinuous structure, as well as to being used simply in affinity gel, and is also particularly useful in an environmental-related field or an analytical chemistry field.

## Claims

1. An affinity carrier not of a particle aggregation type but in a gel state having a bicontinuous structure composed of pores having an average diameter of micrometer size arranged continuously in a three-dimensional network structure and a skeletal phase abundant in organic matters, comprising
at least one compound having at least two functionalities as a crosslinking agent of a vinyl monomer compound, a methacrylate compound or an acrylate compound; and
a copolymer of at least one monofunctional hydrophilic monomer as a ligand-carrying monomer and at least one monofunctional thinning monomer as a thinning agent for arbitrarily controlling a hydrophilic/hydrophobic environment in which a ligand carried by said ligand-carrying monomer is put,
wherein a volume ratio of said crosslinking agent to "said copolymer of the monofunctional hydrophilic monomer and the monofunctional thinning monomer" in said affinity carrier is 100 to 10:0 to 90.

2. The affinity carrier according to claim 1, wherein said monofunctional thinning monomer is a monomer having a hydrophilic group selected from the group consisting of an amino group, an amide group, an ammonium group, a carboxyl group, an ester group, an ether group, a carbonyl group, a hydroxy group, a sulfo group and a phosphate group and a functional group selected from the group consisting of an alkyl group and a phenyl group, derivatives thereof and protected products thereof.

3. The affinity carrier according to claim 1 or 2, wherein said monofunctional thinning monomer is selected from the group consisting of methacrylates and acrylates having a hydroxy group or an ether group, alkyl methacrylates and derivatives thereof, and styrenes and derivatives thereof.

4. The affinity carrier according to any one of claims 1 to 3, wherein said crosslinking agent is selected from the group consisting of divinylbenzene, ethylene glycol dimethacrylate, diethylene glycol dimethacrylate, polyethylene glycol dimethacrylate, acrylate-substituted products thereof, glycerol dimethacrylate, vinyl methacrylate and N,N'-methylenebisacrylamide.

5. A method for producing an affinity carrier not of a particle aggregation type but in a gel state having a bicontinuous structure composed of pores having an average diameter of micrometer size arranged continuously in a three-dimensional network structure and a skeletal phase abundant in organic matters, comprising:
blending
at least one bifunctional compound as a crosslinking agent of a vinyl monomer compound, a methacrylate compound and an acrylate compound,
at least one monofunctional hydrophilic monomer as a ligand-carrying monomer, and
at least one monofunctional thinning monomer as a thinning agent for arbitrarily controlling a hydrophilic/hydrophobic environment in which a ligand carried by said ligand-carrying monomer is put,
in such a volume ratio that said crosslinking agent to "said copolymer of the monofunctional hydrophilic monomer and the monofunctional thinning monomer" is 100 to 10:0 to 90; copolymerizing them in at least one solvent selected from the group consisting of water and water-soluble solvents having a molecular weight of not more than 500 in the presence of a radical polymerization initiator to give a gel matter; immersing the gel matter in water to wash; and drying for keeping the bicontinuous structure.

6. The method for producing an affinity carrier according to claim 5, wherein said water-soluble solvent is selected from the group consisting of ethylene glycol, diethylene glycol, triethylene glycol, tetraethylene glycol, pentaethylene glycol, hexaethylene glycol, triethylamine, vinylpyridine, formamide, dimethylformamide, acetonitrile, acetone, methanol and ethanol.
